## Europäisches Patentamt

(19) **European Patent Office**

**Office européen des brevets**

(11) Numéro de publication: **0 050 057**
**B1**

(12) # FASCICULE DE BREVET EUROPEEN

(45) Date de publication du fascicule du brevet:
25.04.84

(51) Int. Cl.³: **B 62 K 11/10**, B 62 M 23/02, B 62 M 7/06

(21) Numéro de dépôt: 81401452.8

(22) Date de dépôt: 18.09.81

(54) **Véhicule à deux roues à propulsion électrique.**

(30) Priorité: **15.10.80 FR 8022011**

(43) Date de publication de la demande:
**21.04.82 Bulletin 82/16**

(45) Mention de la délivrance du brevet:
**25.04.84 Bulletin 84/17**

(84) Etats contractants désignés:
**AT BE CH DE FR GB IT LI LU NL SE**

(56) Documents cités:
**AT - B - 327 023**
**AT - B - 355 437**
**FR - A - 2 082 868**
**FR - A - 2 180 709**
**FR - A - 2 453 069**
**US - A - 3 554 311**
**US - A - 3 937 291**
**US - A - 3 954 145**

(73) Titulaire: **CYCLES PEUGEOT Société dite:, Beaulieu, F-25700 Valentigney (FR)**

(72) Inventeur: **Lacroix, Bernard, 2 Rue de la Vouivre, F-25200 Montbeliard (FR)**

(74) Mandataire: **Poius, Camille et al, c/o Cabinet Lavoix 2, Place d'Estienne d'Orves, F-75441 Paris Cedex 09 (FR)**

Véhicule à deux roues à propulsion électrique

La présente invention concerne les véhicules à deux roues à propulsion électrique.

On a déjà proposé un certain nombre de tels véhicules dont la propulsion est assurée par un moteur électrique alimenté à partir de batteries d'accumulateurs supportées par un berceau et disposées sous la partie centrale du cadre du véhicule. Le moteur quant à lui disposé sous la selle et en avant de cette dernière. Une telle disposition présente de sérieux inconvénients parmi lesquels on peut citer les suivants:

— compte tenu l'emplacement des batteries, il est difficile de placer le pédalier qui demeure indispensable pour pouvoir propulser le véhicule en cas de panne ou bien pour aider à cette propulsion lorsque le véhicule circule en côte;

— compte tenu du volume occupé par ces batteries, les pieds de l'utilisateur sont surélevés ou écartés selon qu'ils prennent appui sur un repose pieds placé au-dessus ou de part et d'autre des batteries;

— cette disposition est le plus très défavorable au plan de l'esthétique et se prête mal à la réalisation d'un véhicule d'aspect agréable.

L'invention se propose de remédier à ces divers inconvénients: elle a pour objet un véhicule à deux roues à propulsion électrique, comprenant un cadre portant, dans sa partie centrale, des batteries d'accumulateurs électriques et un moteur alimenté à partir de ces batteries d'accumulateurs, ainsi que des moyens de transmission entre le moteur et la roue motrice, caractérisé en ce que d'autres batteries sont disposées de part et d'autre de la roue arrière de ce véhicule.

Suivant d'autres caractéristiques: il est prévu dans la partie centrale du véhicule deux sous-ensembles de batteries disposés à peu près symétriquement par rapport au plan longitudinal médian du véhicule et délimitant entre eux un logement dans lequel peuvent être reçus divers accessoires;

— les batteries ont une hauteur relativement faible;

— l'arbre du pédalier s'étend dans une zone intermédiaire entre les batteries d'accumulateurs disposées respectivement dans la partie centrale du véhicule de part et d'autre de la roue arrière;

— le moteur est disposé sous la selle et en arrière de celle-ci.

L'invention va être décrite plus en détail ci-dessous en se référant au dessin annexé dont:

— la fig. 1 est une vue schématique en élévation latérale d'un véhicule équipé suivant l'invention;

— les fig. 2 et 3 sont respectivement des vues en coupe suivant les lignes 2-2 et 3-3 de la fig. 1, certaines pièces étant supprimées, dans un but de clarté;

— la fig. 4 est une vue en élévation latérale d'une variante de transmission entre le moteur et la roue arrière; et

— la fig. 5 est une vue en coupe suivant la ligne 5-5 de la fig. 4.

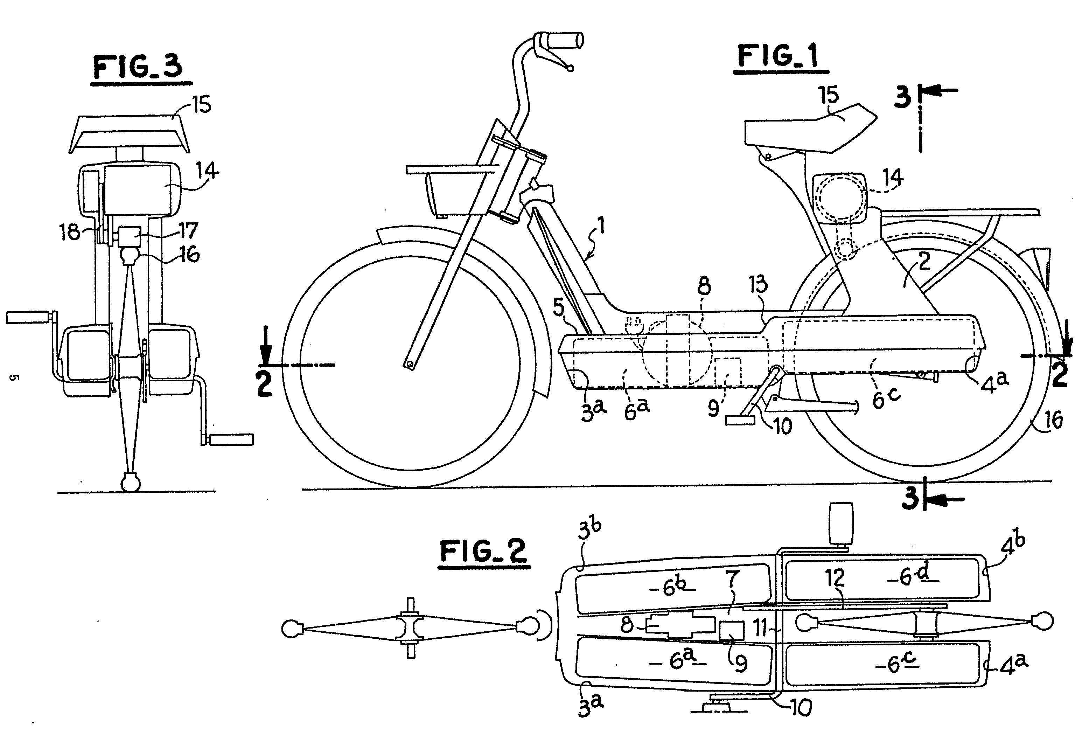

On voit sur les fig. 1 à 3 un véhicule à deux roues conçu suivant l'invention. Ce véhicule comprend principalement un cadre 1 réalisé de toute façon convenable, par exemple en tube métallique. Ce cadre porte de part et d'autre de sa partie centrale et de sa fourche arrière 2 des caissons ou compartiments $3^a$, $3^b$, $4^a$, $4^b$ qui sont fermés à leur partie supérieure par un capot 5 en une ou plusieurs parties et dans lesquels sont reçues des batteries d'accumulateurs destinées à alimenter un moteur électrique. Dans l'exemple représenté, il est prévu quatre compartiments dont deux $3^a$, $3^b$ sont disposés dans la partie centrale du véhicule de part et d'autre du cadre et dont les deux autres $4^a$, $4^b$ sont disposés de part et d'autre de la roue arrière motrice du véhicule. Ces deux derniers compartiments peuvent s'étendre, comme représenté au dessin, sensiblement au delà de l'axe de la roue arrière.

Ces compartiments reçoivent chacun une batterie ou une série de batteries d'accumulateurs $6^a$, $6^b$, $6^c$, $6^d$ dont la dimension en hauteur est relativement faible (par exemple de l'ordre de 10 cm) de façon à ne pas provoquer, notamment dans la partie centrale du véhicule un encombrement trop important.

Entre les deux compartiments $3^a$, $3^b$ disposés dans ladite partie centrale du véhicule, est délimité un logement 7 qui peut recevoir un câble 8, un chargeur de batterie 9 ou tout autre accessoire utile. Ce logement est également fermé par le capot 5.

Un pédalier 10 est disposé de telle façon que son arbre 11 s'étend entre les paires de compartiments avant et arrière. Ce pédalier entraîne d'une façon classique la roue arrière par l'intermédiaire d'une transmission à chaîne 12.

On notera également que dans l'exemple représenté, un léger décrochement 13 existe entre les compartiments avant et arrière, de façon à abaisser le centre de gravité et à abaisser également le plan d'appui pour les pieds du passager. L'esthétique du véhicule s'en trouve également améliorée. De plus, de préférence, les compartiments avant $3^a$, $3^b$, sont orientés en coupe horizontale, légèrement en oblique, et convergent vers l'avant du véhicule (fig. 2).

Le moteur électrique 14 est disposé sous la selle 15 et en arrière de cette dernière. Dans l'exemple des fig. 1 à 3, la transmission entre ce moteur et la roue arrière 16 est réalisée au moyen d'un galet de friction 17 en contact avec le pneumatique et entraîné par une transmission 18 à courroie crantée ou à chaîne. Comme connu en soi, le galet peut le cas échéant être dégagé du pneumatique.

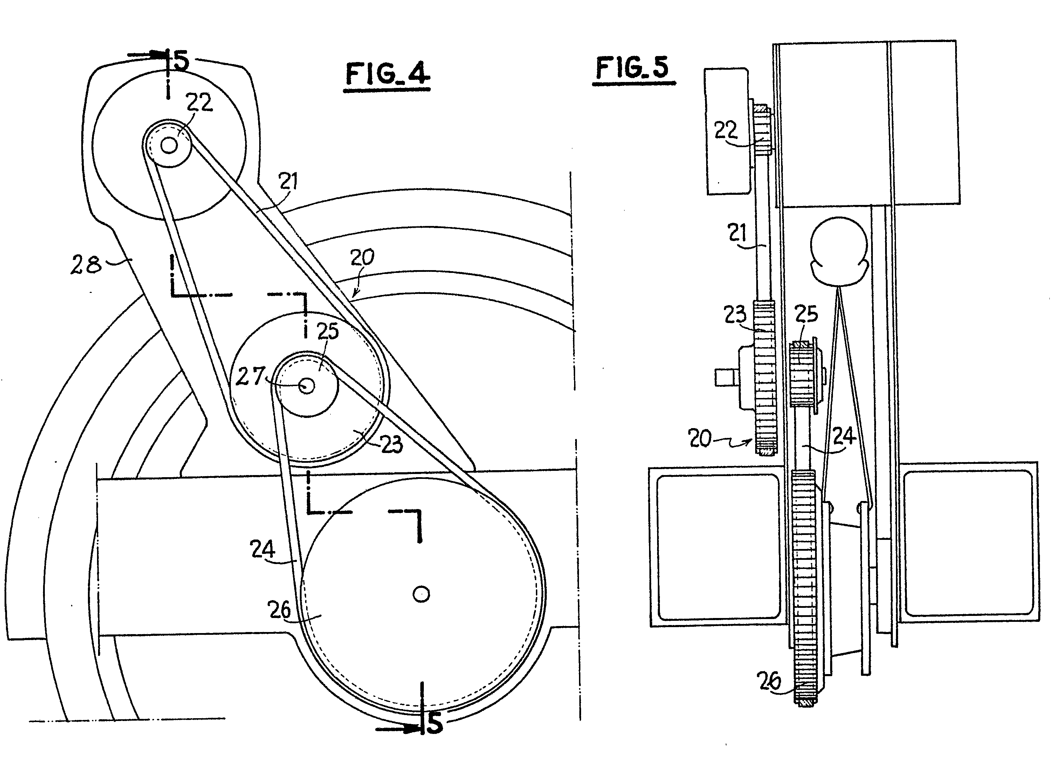

Dans le mode de réalisation des fig. 4 et 5, cette transmission est réalisée au moyen d'un dispositif démultiplicateur 20, comprenant deux transmissions à chaîne ou à courroie, en série, comportant respectivement une première courroie 21 passant sur deux poulies 22, 23, et une deuxième courroie 24 passant sur des poulies 25, 26, les deux poulies intermédiaires ou poulies relais 23, 25 étant calées sur le même arbre 27. Ce dispositif est reçu dans un carter 28 et son encombrement demeure très faible.

Il est inutile de décrire le fonctionnement d'un tel véhicule. Par contre, il est utile de préciser les avantages qu'il présente par rapport aux véhicules classiques à propulsion électrique:

— la disposition originale des batteries d'accumulateurs est particulièrement favorable étant donné que le fait de prévoir certaines de ces batteries de part et d'autre de la roue arrière permet de réduire l'encombrement des séries de batteries dans la partie centrale du véhicule, notamment en hauteur, tout en conservant au véhicule la même autonomie ou même en l'augmentant. Il en résulte que l'espace di sponible pour les pieds et les jambes de l'utilisateur est sensiblement accru et que la stabilité du véhicule est améliorée. La ligne du véhicule est de plus considérablement allégée et de ce fait plus élégante.

— le fait de prévoir des compartiments avant et arrière pour ces mêmes batteries permet de disposer l'axe du pédalier dans l'intervalle entre les deux compartiments, ce qui est également très favorable.

— le fait de prévoir dans la partie centrale du véhicule un compartiment de part et d'autre du cadre permet de libérer un logement qui peut ainsi recevoir des accessoires qu'il est habituellement difficile de loger.

— l'emplacement du moteur est également favorable car il permet là encore de libérer le volume sous la selle et en avant de celle-ci, contrairement à ce que l'on constate dans les véhicules déjà réalisés.

## Revendications

1. Véhicule à deux roues à propulsion électrique, comprenant un cadre (1) portant des batteries d'accumulateurs électriques (6ª—6ᵇ) dans la partie centrale du cadre et un moteur (14) alimenté à partir de ces batteries d'accumulateurs, ainsi que des moyens de transmission entre le moteur et la roue motrice (16), caractérisé en ce que d'autres batteries (6ᶜ, 6ᵈ) sont disposées de part et d'autre de la roue arrière (16) de ce véhicule.

2. Véhicule suivant la revendication 1, caractérisé en ce que les batteries disposées dans la partie centrale du véhicule sont réparties en deux sous-ensembles de batteries (6ª, 6ᵇ) disposées à peu près symétriquement par rapport au plan longitudinal médian du véhicule et délimitent entre eux un logement (7) dans lequel peuvent être reçus divers accessoires (8, 9).

3. Véhicule suivant la revendication 1, caractérisé en ce que les batteries (6ª—6ᵈ) ont une hauteur faible, de l'urdre de 10 cm.

4. Véhicule suivant l'une quelconque des revendications 1 à 3, caractérisé en ce que les batteries sont logées dans des caissons ou compartiments (3ª, 3ᵇ, 4ª, 4ᵇ) fermés à leur partie supérieure par au moins un capot (5).

5. Véhicule suivant la revendication 4, caractérisé en ce qu'il existe un décrochement (13) entre les compartiments avant (3ª, 3ᵇ) et arrière (4ª, 4ᵇ), les compartiments avant étant situés à un niveau inférieur.

6. Véhicule suivant la revendication 4, caractérisé en ce que, en coupe horizontale, les compartiments avant (3ª, 3ᵇ) sont orientés légèrement en oblique et convergent vers l'avant du véhicule.

7. Véhicule suivant l'une quelconque des revendications 1 à 6, caractérisé en ce que l'arbre (11) du pédalier (10) s'étend dans une zone intermédiaire entre les batteries d'accumulateurs disposées respectivement dans la partie centrale du véhicule et de part et d'autre de la roue arrière.

8. Véhicule suivant l'une quelconque des revendications 1 à 7, caractérisé en ce que le moteur (14) est disposé sous la selle (15) et en arrière de celle-ci.

9. Véhicule suivant la revendication 8, caractérisé en ce que la transmission entre le moteur (14) et la roue arrière (16) est réalisée au moyen d'un galet de friction (17) en contact avec le pneumatique et entraîné par une transmission (18) à courroie crantée ou à chaîne.

10. Véhicule suivant la revendication 8, caractérisé en ce que cette transmission est réalisée au moyen d'un dispositif démultiplicateur (20), comprenant deux transmission à chaîne ou à courroie en série, comportant respectivement une première courroie (21) passant sur deux poulies (22, 23) et une deuxième courroie (24) passant sur des poulies (25, 26), les deux poulies intermédiaires ou poulies relais (23, 25) étant calées sur le même arbre (27).

## Patentansprüche

1. Zweirad mit Elektroantrieb, mit einem Rahmen (1) mit Batterien (6a—6b) im Mittelteil des Rahmens und einem von den Batterien angetriebenen Motor (14) sowie Übertragungsmitteln zwischen dem Motor und dem Antriebsrad (16), dadurch gekennzeichnet, daß weitere Batterien (6c, 6d) zu beiden Seiten des Hinterrades (16) des Fahrzeugs angeordnet sind.

2. Fahrzeug nach Anspruch 1, dadurch gekennzeichnet, daß die im Mittelteil des Fahrzeugs angeordneten Batterien in zwei Batterie-Untereinheiten (6a, 6b) unterteilt sind, welche nahezu symmetrisch zur Mittelebene in Längsrichtung des Fahrzeugs angeordnet sind und zwischen sich einen Raum (7) für die Aufnahme verschiedener zusätzlicher Teile (8, 9) bilden.

3. Fahrzeug nach Anspruch 1, dadurch gekennzeichnet, daß die Batterien (6a–6d) eine geringe Höhe, d. h. von etwa 10 cm, aufweisen.

4. Fahrzeug nach einem der Ansprüche 1 bis 3, dadurch gekennzeichnet, daß die Batterien in Kästen bzw. Behältern (3a, 3b, 4a, 4b) angeordnet sind, die an ihrem oberen Ende durch mindestens eine Abdeckung (5) verschlossen sind.

5. Fahrzeug nach Anspruch 4, dadurch gekennzeichnet, daß zwischen den vorderen Behältern (3a, 3b) und den hinteren Behältern (4a, 4b) eine Absenkung (13) gebildet ist, so daß sich die vorderen Behälter (4a, 4b) auf einer geringeren Höhe befinden.

6. Fahrzeug nach Anspruch 4, dadurch gekennzeichnet, daß die vorderen Behälter (3a, 3b) im Querschnitt gesehen leicht schräggestellt sind und in Richtung des vorderen Teils des Fahrzeugs aufeinander zu verlaufen.

7. Fahrzeug nach einem der Ansprüche 1 bis 6, dadurch gekennzeichnet, daß die Achse (11) des Pedals (10) sich in einem Bereich zwischen den Batterien erstreckt, die jeweils im Mittelteil des Fahrzeugs zu beiden Seiten des Hinterrades angeordnet sind.

8. Fahrzeug nach einem der Ansprüche 1 bis 7, dadurch gekennzeichnet, daß der Motor (14) unter dem Sattel (15) sowie hinter diesem angeordnet ist.

9. Fahrzeug nach Anspruch 8, dadurch gekennzeichnet, daß die Übertragung zwischen dem Motor (14) und dem Hinterrad (16) über eine Reibrolle (17) erfolgt, die mit der Bereifung in Berührung steht und durch einen Zahnriemen- oder Kettentrieb (18) antreibbar ist.

10. Fahrzeug nach Anspruch 8, dadurch gekennzeichnet, daß die Übertragung mit Hilfe eines Untersetzungsgetriebes (20) erfolgt, das zwei Ketten- oder Riementriebe mit jeweils einem ersten Riemen (21) aufweist, der über zwei Scheiben (22, 23) läuft sowie einen zweiten Riemen, der über die Scheiben (25, 26) läuft, wobei die beiden Zwischenscheiben (23, 25) fest auf derselben Welle (27) verkeilt sind.

**Claims**

1. An electrically propelled two-wheeled vehicle, comprising a frame (1) carrying electric accumulator batteries (6a, 6b) in the centre part of the frame and a motor (14) supplied with current from said batteries, and transmission means between the motor and the driving wheel (16), characterized in that further batteries (6c, 6d) are located on each side of the rear wheel (16) of the vehicle.

2. Vehicle according to claim 1, characterized in that the batteries located in the centre part of the vehicle are split in two subassemblies (6a, 6b) which are located roughly symmetrically relative to the longitudinal median plane of the vehicle and define therebetween a space (7) in which various accessories (8, 9) may be received.

3. Vehicle according to claim 1, characterized in that the batteries (6a, 6d) have a small height of about 10 cm.

4. Vehicle according to claim 1, 2 or 3, characterized in that the batteries are disposed in boxes or compartments (3a, 3b, 4a, 4b) which are closed in their upper part by at least one lid (5).

5. Vehicle according to claim 4, characterized in that a step (13) is provided between the front (3a, 3b) and rear (4a, 4b) compartments, the front compartments being at a lower level than the rear compartments.

6. Vehicle according to claim 4, characterized in that, in horizontal cross-section, the front compartments (3a, 3b) are oriented slightly obliquely and converge toward the front of the vehicle.

7. Vehicle according to any one of the claims 1 to 6, characterized in that the shaft (11) of the pedal crank-gear (10) extends in a region between the batteries located respectively in the centre part of the vehicle and on each side of the rear wheel.

8. Vehicle according to any one of the claims 1 to 7, characterized in that the motor (14) is located below and at the rear of the saddle (15).

9. Vehicle according to claim 8, characterized in that the transmission between the motor (14) and the rear wheel (16) is provided by means of a friction roller (17) engaging the tire and driven by a toothed belt or chain transmission (18).

10. Vehicle according to claim 8, characterized in that said transmission is procided by a gearing down device (20) comprising two chain or belt transmissions in series, respectively comprising a first belt (21) extending around a first pair of pulleys (22, 23) and a second belt (24) extending around a second pair of pulleys (25, 26), the two intermediate or relay pulleys (23, 25) being keyed on a common shaft (27).

FIG_1

FIG_2

FIG_3

FIG.4

FIG.5

0 050 057